# EUROPEAN PATENT APPLICATION

(11) **EP 3 958 166 A1**
(43) Date of publication of application: **23.02.2022**
(21) Application number: 20191817.4
(22) Date of filing: 19.08.2020
(51) Int. Cl.: G06K 9/00

(54) **METHOD AND SYSTEM FOR ENABLING AN ELECTRONIC PAYMENT**

(71) Applicant: Qamcom Innovation Labs AB, 41285 Gothenburg (SE)
(72) Inventor: Bergqvist, Johan, 6300 Zürich (CH); Herp, Arnold, 91096 Moehrendorf (DE)
(74) Representative: Prins Intellectual Property AG

(57) **Abstract**

A method and a system comprise: at a hand imaging device (1, 1', ...), capturing (S4) image data of a hand (91) of a current person (9), at a federation server (11), comparing (S5) a current feature vector determined from the captured image data with pre-stored feature vectors of enrolled persons, at a user device (92) of the current person (9), processing (S8) second factor information for enabling execution of an electronic payment In some embodiments, the electronic payment is initiated by a payment service server (21) and forwarded to a bank (5, 5', ...) via a banking gateway (4) for adhering to payment protocols of the bank (5, 5', ...).

## Description

### Technical Field

The present disclosure relates to a method and system for enabling an electronic payment.

### Prior Art

Security risks relating to electronic payments have increased. Security of electronic payments is fundamental for ensuring the protection of users and the development of a sound environment for commerce.

In the Directive (EU) 2015/2366 of the European Parliament (PSD2) strong customer authentication is defined as an authentication based on the use of two or more elements categorised as knowledge (something only the user knows), possession (something only the user possesses) and inherence (something the user is) that are independent, in that the breach of one does not compromise the reliability of the others, and is designed in such a way as to protect the confidentiality of the authentication data. Possible inherence elements include: fingerprint scanning; voice recognition; vein recognition; hand and face geometry; retina and iris scanning; keystroke dynamics; heart rate or other body movement pattern identifying the payment service users; the angle at which the device is held. Possible possession elements: possession of a device evidenced by a one-time password generated by, or received on, a device; possession of a device evidenced by a signature generated by a device; card or device evidenced through a QR code (or photo TAN) scanned from an external device; app or browser with possession evidenced by device binding - such as through a security chip embedded into a device or private key linking an app to a device, or the registration of the web browser linking a browser to a device; card evidenced by a card reader; card with possession evidenced by a dynamic card security code. Possible knowledge elements include: password; PIN; knowledge-based challenge questions; passphrase; memorised swiping path.

In the Regulation (EU) 2016/679 of the European Parliament (GDPR) defines stronger rules for the protection of natural persons with regard to the processing of personal data and the free movement of such data, such that people have more control over their personal data, and that businesses benefit from a level playing field.

US20190392189A1 discloses a non-contact biometric identification system. A hand scanner generates images of a user's palm. Images acquired using light of a first polarization at a first time show surface characteristics such as wrinkles in the palm. Images acquired using light of a second polarization at a second time show deeper characteristics such as veins. Within the images, the palm is identified and subdivided into sub-images. The sub-images are processed to determine feature vectors present in each sub-image. A current signature is determined using the feature vectors. A user may be identified based on a comparison of the current signature with a previously stored reference signature that is associated with a user identifier.

WO2000049551A1 discloses a network for processing retail sales transactions. The network includes a customer transceiver with a unique customer number, a reader for receiving the customer number and sending it to a point-of-sale device where it is combined with transaction information to form a transaction entry. The transaction entry is sent through a merchant computer to a transaction processing system having a customer database. The transaction processing system references an entry corresponding to the customer number and routes the transaction entry to a payment processing system specified in the customer database. The customer transceiver may optionally include a security pad comprising a fingerprint reader, palm print, pore print, retinal, etc.

### Summary of the Invention

It is an objective of the invention to provide a method and system for enabling an electronic payment which do not have at least some of the disadvantages of the prior art. In particular, it is an objective of the invention to provide a method and system for enabling an electronic payment which improve security. In particular, it is an objective of the invention to provide method and system for enabling an electronic payment which enable simple integration into existing infrastructures and widespread deployment. In particular, it is an objective of the invention to provide method and system for enabling an electronic payment which enable high user and customer acceptance. In particular, it is an objective of the invention to provide a method and system which comply with the GDPR regulation and PSD2 directive of the European parliament.

At least one objective of the invention is achieved by the biometrics imaging device and the biometrics imaging method defined in the enclosed independent claims. The dependent claims set forth further embodiments of the invention.

At least one objective of the invention is achieved by a method comprising: at a hand imaging device, capturing image data of a hand of a current person, at a federation server, comparing a current feature vector determined from the captured image data with pre-stored feature vectors of enrolled persons, at a user device of the current person, processing second factor information for enabling execution of an electronic payment.

The method complies with PSD2 and GDPR, wherein the inherence element is the hand of the current person, and the possession element is the user device of the current person. Accordingly, the method is highly secure. Contrary to capturing a fingerprint, which may be copied from an object the current person has touched, and contrary to face recognition, which may be performed without consent by the current person, capturing image data of a hand of a person, in particular of the palm print of the hand, requires explicit consent by the current person. As fingertips are very convex and often wrinkled, reproducible fingerprints are only possible by pressing the fingertip on a sensor. Accordingly, high user acceptance is enabled. In some embodiments, capturing the image data of the hand is performed when a posture of the hand corresponds to a predefined posture. For example, the predefined posture may be defined by a predefined position of the fingers with respect to the palm of the hand (such as for example by fingers and palm of the hand forming a flat hand with a predefined distance between the fingers), a distance between the hand and the hand imaging device, and a predefined orientation of the hand with respect to the hand imaging device (such as for example the palm of the hand facing the hand imaging device), In some embodiments, the hand imaging device is configured for providing feedback to the current as regards a difference between a current posture of the hand and the predefined posture of the hand (such as displaying on a display of the hand imaging device simultaneously the current posture of the hand and the predefined posture of the hand). In some embodiments, determining the current feature vector may be performed by the hand imaging device. In some embodiments, captured image data may be transmitted to a server system for determining the current feature vector. In some embodiments, processing second factor information at the user device may be based on information received on the user device via an encrypted channel, such as via a mobile telecommunication network, an encrypted channel which makes use of a Bluetooth connection between the user device and the hand imaging device, etc. Furthermore, because of comparison with pre-stored feature vectors (instead of with pre-stored image data) storage volume and requirements as regards processing power are reduced. Accordingly, simple integration into existing infrastructures and widespread deployment is enabled.

In some embodiments, the method further comprises: at the hand imaging device capturing image data of the hand which includes: a palm print of the hand, and a vein pattern of the hand, and three dimensional image data of the hand. Thus, the current feature vector is based on palm print and vein pattern and three dimensional image data of the hand, thereby enabling a highly secure inherence element. In some embodiments, capturing the palm print of the hand and the vein pattern of the hand and the three dimensional image data of the hand is performed simultaneously or at least within up to 10 milliseconds or within up to 15 milliseconds or within up to 50 milliseconds. Thus, the current feature vector is based on synchronized image data.

In some embodiments, the method further comprises: at the hand imaging device, capturing image data of the hand without physical contact between the hand and the hand imaging device. Thus, hygienic requirements are complied with, thereby improving user acceptance.

In some embodiments, the method further comprises: at the hand imaging device determining at least partially the current feature vector.

In some embodiments, the current feature vector is determined by processing one or more of the following features: the texture and the course of visible lines of the hand, the texture and the pattern and course of the veins and the geometry of the hand. A curvature of a lifeline of a palm print may be processed. A length of a lifeline of a palm print may be processed, A curvature of a vein pattern may be processed. A length of a vein pattern may be processed. A geometry of the fingers of a hand may be processed.

In some embodiments, one or more of the captured image data and the current feature vector is transmitted from the hand imaging device via a first communication channel, and wherein the second factor information is processed at the user device upon receipt of information via a second communication channel which is separate from the first communication channel. Accordingly, security is further improved.

In some embodiments, the method further comprises: at a payment service server, receiving a payment request for goods and services the current person wishes to buy, and transmitting a hand verification request to the federation server, at the federation server, determining, after comparison of the current feature vector with pre-stored feature vectors, identification information of the current person and transmitting identification information to the payment service server, at the payment service server, transmitting a payment order from the payment service server to a banking gateway.

The federation server may include a database for storing the pre-stored feature vectors and unique, anonymized identification information of the current person. The payment service server may include a database for storing unique, anonymized identification information and user data of the current person, such as name, account information, etc. Accordingly, compliance with GDPR is provided and security is further improved.

Furthermore, the present invention relates to a system comprising: a plurality of hand imaging devices for capturing image data of a hand of a current person, a federation server for comparing a current feature vector determined from the captured image data with pre-stored feature vectors of enrolled persons, a user device of the current person for processing second factor information for enabling execution of a financial transaction.

In some embodiments, the hand imaging devices are further configured for capturing image data which includes: a palm print of the hand, and a vein pattern of the hand, and three dimensional image data of the hand.

In some embodiments, the hand imaging devices are further configured for capturing image data of the hand without physical contact between the hand and the hand imaging device.

In some embodiments, the hand imaging devices are further configured for at least partially determining the current feature vector.

In some embodiments, one or more of the hand imaging devices and the federation server are further configured for determining the current feature vector by processing one or more of: the texture and the course of visible lines of the hand, the texture and the pattern and course of the veins and the geometry of the hand.

In some embodiments, the hand imaging devices are configured for transmitting one or more of the captured image data and the current feature vector via a first communication channel, and wherein the user device is further configured for processing the second factor information upon receipt of information via a second communication channel which is separate from the first communication channel.

In some embodiments, the system further comprises: a payment service server for receiving a payment request for goods and services the current person wishes to buy, and for transmitting a hand verification request to the federation server, wherein: the federation server is further configured for determining, after comparison of the current feature vector with pre-stored feature vectors, identification information of the current person and transmitting identification information to the payment service server, the payment service server is further configured for transmitting a payment order from the payment service server to a banking gateway.

### Brief Explanation of the Figures

The invention is described in greater detail below with reference to embodiments that are illustrated in the figures. The figures show:
- Fig. 1: illustrates schematically method and a system in accordance with some embodiments of the invention;
- Fig. 1a: illustrates a flow diagram of the steps of a method in accordance with some embodiments of the invention;
- Fig. 2: illustrates schematically a method and a system for enrolling information stored in a database of a federation server;
- Fig. 2a: illustrates a flow diagram of the steps of a method for enrolling information stored in a database of a federation server;
- Fig. 3: illustrates schematically a hand imaging device and a hand of a current person;
- Fig. 4: illustrates schematically a palm of a hand of a current person;
- Fig. 5: illustrates schematically a vein pattern of a hand of a current person.

### Embodiments of the Invention

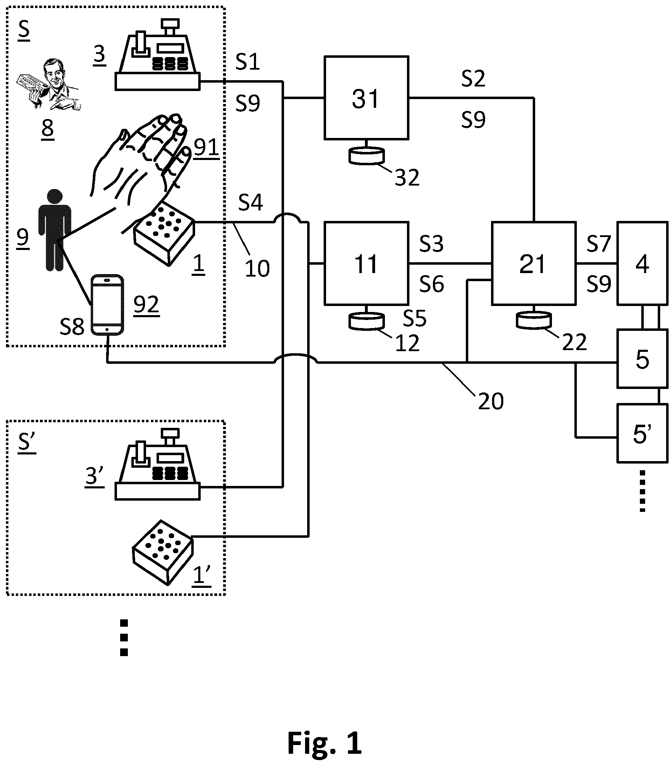

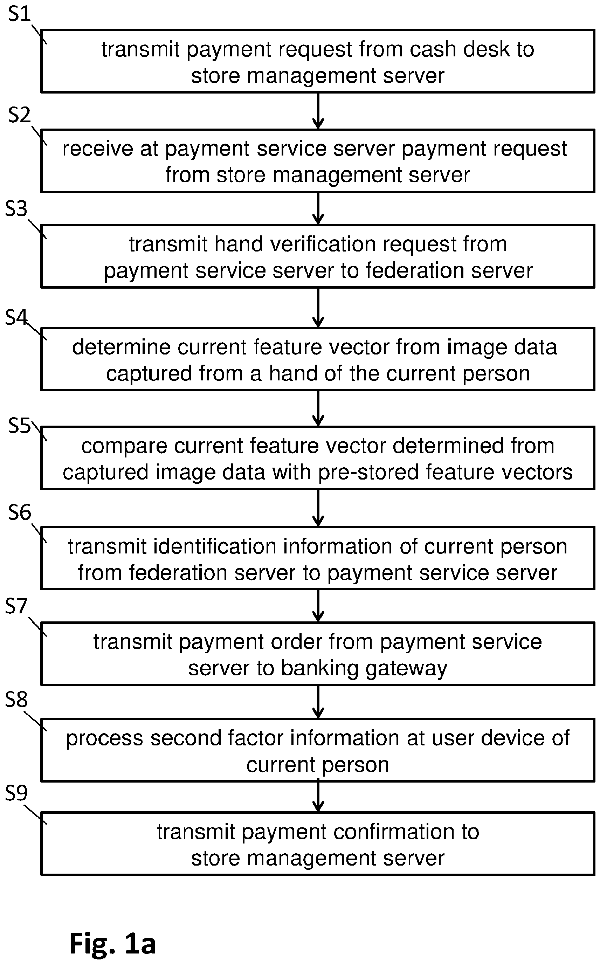

Figure 1 illustrates schematically a method and a system in accordance with some embodiments of the invention.

As illustrated in Figure 1, a plurality of store areas S, S', ... is arranged. The store areas S, S', ... may relate to a plurality of individual stores such as grocery stores, clothing stores, bakeries, butcher's shops, pharmacies, etc., to a plurality of payment areas in a particular store, or to a combination thereof.

As illustrated in Figure 1, each store area S, S', ... includes a cash desk 3, 3', ... and a hand imaging device 1, 1', .... The cash desk 3 of a store area S of a store may be operated by a store clerk 8. The hand imaging device 1 supports the purpose of enabling execution of an electronic payment, i.e. a payment in exchange of goods and services a current person 9 wishes to buy from the store, as will be described in the following. In some embodiments, i.e. in case of a self-service checkout, the cash desk 3 may be operated by the current person 9. The cash desk 3 enables recording information about goods and services the current person 9 wishes to buy from the store. The cash desk 3 may include an optical scanner for scanning optical codes attached to goods and service descriptions the current person 9 wishes to buy from the store. In the future, the technology for providing a hand imaging device 1, 1', ... may be directly integrated into laptop computers or tablet computers or handheld devices, thereby enabling that the current person 9 may purchase goods and services from an online store, wherein the store area S, S', ... may relate to a home location of the current person 9 and the cash desk 3, 3', ... may relate to an online shopping cart.

In the following, communication channels are described which enable transmission of electronic data, electronic messages, etc. The communication channels may make use of wired technologies, such as Ethernet, and/or wireless technologies, such as WiFi, mobile network, etc. The communication channels may make use of cryptographic protocols that provide security and data integrity, such as SSL (SSL: secure socket layer), End-to-End Encryption (E2EE),etc.

As illustrated in Figure 1, a store management server 31 is arranged for managing the stores and the store areas S, S', ..., in particular for managing store logistics, Point of Sales (PoS) in store areas S, S', ..., etc. The store management server 31 is connected to or includes a database 32, which enables storing and retrieving information for managing the stores and the store areas S, S', ..., such as a store identification number, a cash desk identification number, etc. The cash desks 3, 3', ... are connected via communication channels with the store management server 31. The cash desks 3, 3', ... are configured for recording information about goods and services the current person 9 wishes to buy from the store, and to transmit the recorded information to the store management server 31, e.g. upon a checkout request initiated by the store clerk 8 or the current person 9. For each good or service the current person 9 wishes to buy from the store, the recorded information may include a respective identification number, a respective price, a respective number of items, etc.

As illustrated in Figure 1, a payment service server 21 is arranged for providing payment services. The payment service server 21 is connected to or includes a database 22, which enables storing and retrieving information related to payments, such as a total sum, payment information associated with the current person 9, etc. As illustrated in Figure 1, a banking gateway 4 is arranged for transferring execution of electronic payments to banks 5, 5', .... The store management system 31 is connected via a communication channel to the payment service server 21. The payment service server 21 is connected via a communication channel to the banking gateway 4. The banking gateway 4 is connected via communication channels to the banks 5, 5', .... The payment service server 21 and/or the banks 5, 5', ... are connected via communication channels to a user device 92 of the current person 9. The user device 92 is configured for processing second factor information such as a TAN (TAN: transaction number), an SMS (SMS: short message service), etc. For the purpose of processing second factor information, the user device 92 may include a specifically designed app.

As illustrated in Figure 1, a federation server 11 is arranged for processing information related to the hand imaging devices 1, 1', ... of the store areas S, S', ..., and the supervisor devices 2, 2', ... of the enrolment areas E, E', ... which will be described below. The federation server 11 is connected to or includes a database 12, which enables storing and retrieving pre-stored feature vectors associated with respective person identifications. The person identifications are unique and anonymized for reasons of security and compliance with GDPR. No personal data other than the feature vectors of a hand of the current person 9 and the unique, anonymized person identification are stored in the database 12. The link to other personal data, such as name, account number, etc., is provided in the payment server 21. Accordingly, compromising the system would require hacking the federation server 11 and its database 12 as well as hacking the payment service server 21 and its database 22. In some embodiments, the federation server 11 and the payment service server 21 are operated by different operators, and/or different security measures are implemented. The federation server 11 is connected via a communication channel to the payment service server 21. The hand imaging devices 1, 1', ... are connected via communication channels to the federation server 11. The hand imaging devices 1, 1', ... are configured to capture image data of a hand 91 of the current person 9. The hand imaging devices 1, 1', ... are configured to determine a current feature vector from the captured image data and to transmit the current feature vector to the federation server 11. The hand imaging devices 1, 1', ... may be configured to transmit captured image data at least partially to the federation server 11, wherein the federation server 11 may be configured to determine at least partially a current feature vector upon receipt of captured image data. Thus, a feature vector which has been determined at the hand imaging device 1 and/or at the federation server 11 from captured image data of the hand 91 of the current person 9 is available on the federation server 11.

Typical existing infrastructures include the cash desks 3, 3', ... and the store management server 31 and the banks 5, 5', ... and the user device 92. By adding the hand imaging devices 1, 1', ... the federation server 11, the payment service server 21 and the banking gateway 4, a method and a system for enabling execution of an electronic payment which improve security can be provided. Moreover, widespread deployment in existing infrastructures is enabled, as well as high user acceptance.

As illustrated in Figure 1 and Figure 1a, a method in accordance to the invention includes the following steps.

In step S1, at cash desk 3, goods and services the current person 9 wishes to buy are recorded, for example using an optical scanner, either by the store clerk 8 or by the current person 9. At the cash desk 3, a payment request is assembled. The payment request may include an identification of goods and services the current person 9 wishes to buy, a number of items, a price for each item, a total price, etc. The payment request is transmitted from the cash desk 3 to the store management server 31. The payment request may include for example an identification of the cash desk, of the store, etc.

In step S2, the payment request is received at the payment service server 21 from the store management server 31.

In step S3, a hand verification request is transmitted from the payment service server 21 to the federation server 11.

In step S4, the federation server 11 initiates and performs hand verification, which includes, at the hand imaging device 1, capturing image data of a hand 91 of the current person 9, and at the hand imaging device 1 and/or at the federation server 11, determining a current feature vector from the captured image data. Accordingly, the current feature vector is received in or is available on the federation server 11.

In step S5, the federation server 11 compares the current feature vector with pre-stored feature vectors of enrolled persons, which were stored in database 12 as will be described later on. If the current feature vector does not match one of the pre-stored feature vectors, the method aborts. Otherwise, identification information of the current person 9 is retrieved from database 12 of the federation server 11.

In step S6, the identification information of the current person 9 is transmitted from the federation server 11 to the payment service server 21.

In step S7, on the basis of the payment request received from the store management server 31 and the identification information received from the federation server 11, the payment service server 21 generates a payment order for execution by a respective bank 5, 5', .... The payment order may include a total sum to be paid, bank account information of the store, bank account information of the current person 9, etc. The payment service server 21 transmits the payment order to the banking gateway 4. The banking gateway 4 adapts the payment order in accordance to a payment protocol of the respective bank 5, 5', ... and transmits the adapted payment order to the respective bank 5, 5', ....

In step S8, second factor information, such as a TAN, an SMS, etc., is processed at the user device 92 of the current person 9. The second factor information may be established by the respective bank 5, 5', ... and/or by the payment service server 21, wherein respective information is transmitted to the user device 92 via the banking gateway 4 and/or the payment service server 21. Processing the second factor information enables execution of a financial transaction by the respective bank 5, 5', ..., which may involve transmitting information related to a result of processing the second factor information to the respective bank 5, 5', ... or to the payment service server 21 for execution of the electronic payment. For small payments, processing of the second factor information may be suppressed.

In step S9, a payment confirmation established by the respective bank 5, 5', ... and received in the payment service server 21 via the banking gateway 4 or established by the payment service server 21 is transmitted from the payment service server 21 to the store management server 31, and further transmitted from the store management server 31 to the cash desk 3, thereby authorizing the current person 9 to checkout respective goods and services.

The method in accordance to the invention is highly secure, in particular because the method is based on an inherence element, namely the hand 91 of the current person 9, as well as based on a possession element, namely the user device 92 of the current person 9. The method is additionally highly secure, because a first communication channel 10 enables verification of the inherence element, and because a second communication channel 20 enables verification of the possession element (cf. Figure 1), wherein the first communication channel 10 is independent from the second communication channel 20, e.g. physically separated, independent from each other, etc. The method is additionally highly secure, because determining a current feature vector from captured image data of a hand of a person enables a highly secure inherence element. Capturing image data of a hand of person is widely accepted, contrary to e.g. face recognition (as illustrated e.g. in https://epic.org/state-policy/facialrecognition/), in particular because capturing image data of a hand of a person, such as the palm, requires explicit consent by the person and explicit posing of the hand, in particular the palm of the hand, relative to the hand imaging device, while capturing image data of the face of a person may be performed without consent by the person. While acquiring fingerprints or iris images may also require explicit consent by the person, it is known that fingerprints and iris images may be copied for authentication, e.g. by copying a fingerprint of the current person 9 from a device the current person 9 has used elsewhere. Furthermore, the method according to the present invention, the current person 9 does not come into contact with the hand imaging device 1 and adhering to hygienic regulations is simplified. Furthermore, the method according to the present invention simplifies secure electronic storage of payment protocols, thereby reducing the need for paper documents and polluting plastic cards.

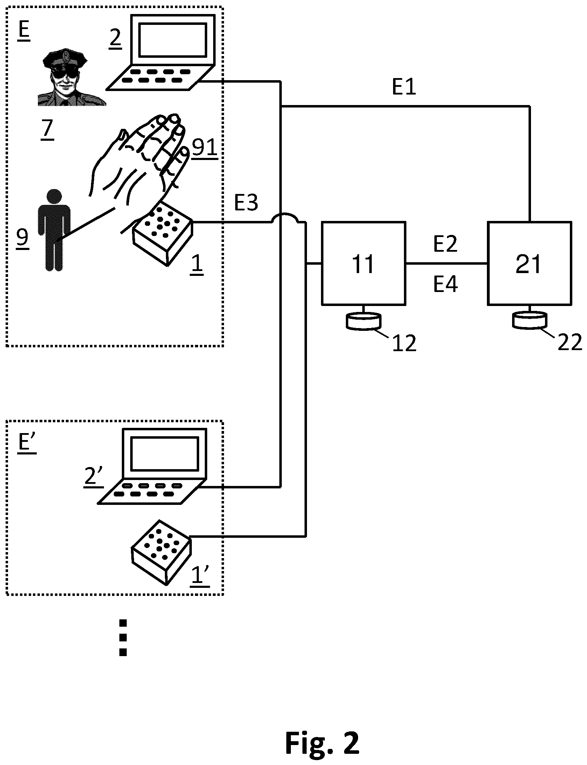

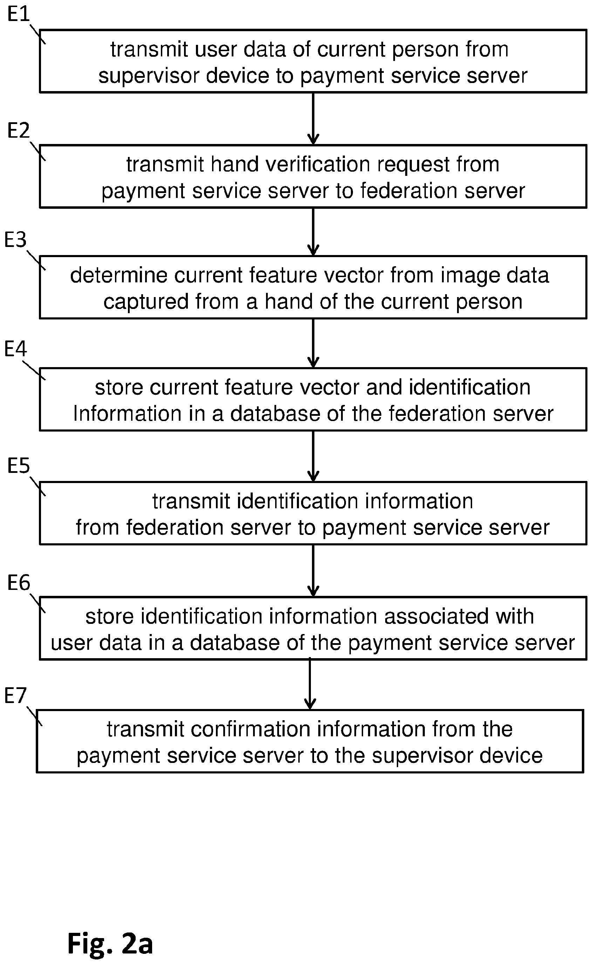

Figure 2 illustrates schematically a method and a system for enrolling information stored in the database 12 of the federation server 11.

As illustrated in Figure 2, enrolment areas E, E', ... are arranged. In some embodiments, one or more of the enrolment areas E, E', ... and one or more of the store areas S, S', ... correspond to each other. Each enrolment area E, E', ... includes a supervisor device 2, 2', .... In some embodiments, one or more of the supervisor devices 2 and one or more of the cash desks 3, 3', ... correspond to each other. The hand imaging devices 1, 1', the federation server 11, the database 12 of the federation server, the payment service server 21, the database 22 of the payment service server 21 and the respective communication channels are arranged in accordance with Figure 2. Furthermore, the supervisor devices 2, 2', ... are connected via communication channels with the payment service server 21.

As illustrated in Figure 2 and Figure 2a, a method for enrolling information stored in the database 12 of the federation server 11 includes the following steps.

In step E1, after verification of the identity of the current person 9 by the supervisor 7 of the current person 9, e.g. on the basis of a passport, identity card, etc., a user interface of the supervisor device 2 performs steps for recording user data of the current person 9 from the supervisor 7. The supervisor device 2 transmits user data of the current person 9 to the payment service server 21, for example to a user management service of the payment service server 21, which stores the user data of the current person 9 in the database 22 of the payment service server. User data may include name, surname, address, bank account information, etc.

In step E2, a hand verification request is transmitted from the payment service server 21 to the federation server 11.

In step E3, the federation server 11 initiates and performs hand verification, which includes, at the hand imaging device 1, capturing image data of a hand 91 of the current person 9, and at the hand imaging device 1 and/or at the federation server 11, determining a current feature vector from the captured image data. Accordingly, the current feature vector is received in or is available on the federation server 11.

In step E4, the federation server 11 stores the current feature vector associated with identification information of the current person 9 in the database 12 of the federation server 11. The identification information may include an identification number, an identification date, etc.

In step E5, the identification information is transmitted from the federation server 11 to the payment service server 21.

In step E6, the payment service server 21 associates the identification information with the user data of the current person 9 and stores the identification information associated with the user data of the current person 9 in the database 22 of the payment service server 21.

In step E7, confirmation information is transmitted from the payment service server 21 to the supervisor device 2 for confirming to the supervisor 7 that enrolment of the current person 9 has been completed.

In some embodiments, the supervisor device 2 is further configured for maintaining/deleting previously enrolled user data and identification information.

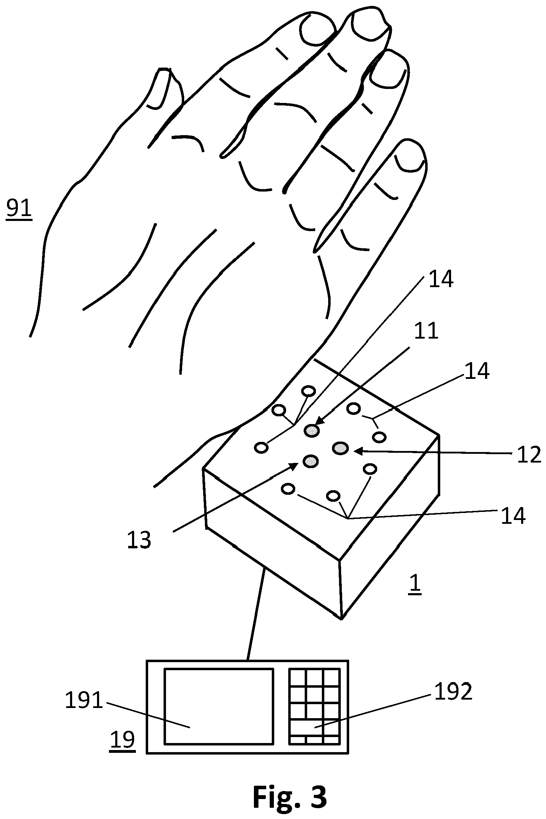

Figure 3 illustrates schematically a hand imaging device 1 for capturing image data of a hand 91 of a current person 9. The hand imaging device 1 includes a visible light sensor 11 for capturing image data in the visible light spectrum, a near infrared light sensor 12 for capturing image data in the near infrared light spectrum, and a time of flight camera 13 for capturing three dimensional image data. One or more of the visible light sensor 11, the near infrared light sensor 12 and the time of flight camera 13 may be included into a single sensor. Furthermore, the hand imaging device includes light sources 14. The light sources 14 may include one or more light sources providing illumination in the visible light spectrum and enabling capturing image data with the visible light sensor 11 in the visible light spectrum. The light sources 14 may include one or more light sources providing illumination in the near infrared light and enabling capturing image data with the near infrared light sensor 12 in the near infrared light.

The visible light sensor 11 may include a visible light sensitive chip providing 2D image data (2D: two dimensional) in accordance to a visible light intensity distribution generated by a 3D scene (3D: three dimensional). The near infrared light sensor 10 may include a near infrared light sensitive chip providing 2D image data (2D: two dimensional) in accordance to a near infrared light intensity distribution generated by a 3D scene (3D: three dimensional). The visible light sensor 11 and the near infrared light sensor 12 may include lenses, buffers, controllers, processing electronics, etc. The visible light sensor 11 and the near infrared light sensor 12 may relate to commercially available sensors such as e2v semiconductors SAS EV76C570 CMOS image sensor, equipped with a blocking optical filter <500nm wavelength for the visible light sensor 11 and with a blocking optical filter of >700nm for the near infrared light sensor 12, or such as OmniVision OV4686 RGB-Ir sensor, with the visible light sensor 11 and the near infrared light sensor 12 combined in one chip and having included a RGB-Ir filter). The light sources 14 may include a visible light and/or near infrared light generator such as an LED (LED: light emitting diode). The light sources 14 may relate to commercially available light sources such as high power LEDs SMB1N series from Roithner Laser Technik GmbH, Vienna. The time of flight camera 13 may relate to a REAL3^{™} of the company Infineon^{™}, and may include the specifications: direct measurement of depth and amplitude in every pixel; highest accuracy; lean computational load; active modulated infra-red light and patented Suppression of Background Illumination (SBI) circuitry in every pixel; full operation in any light condition: darkness and bright sunlight; monocular system architecture having no mechanical baseline; smallest size and high design flexibility; no limitation in close range operation; no special requirements on mechanical stability; no mechanical alignment and angle correction; no recalibration or risk of de-calibration due to drops, vibrations or thermal bending; easy and very fast once-in-a-lifetime calibration; cost efficient manufacturing.

As illustrated in Figure 3, in some embodiments, the hand imaging device 1 is connected with a user interface 19, such as a graphical user interface of a tablet computer, etc. The user interface 19 includes a display 191 and optionally a physical or virtual keyboard 192. Because of hygienic reasons, a virtual keyboard of a touchscreen is preferred, which is easier to clean than a physical keyboard. In other embodiments, the hand imaging device 1 is configured to register finger gestures, thereby replacing the touchscreen and improving hygienic conditions further The hand imaging device 1 may be configured for displaying guidance information to the current person 9 on the display 191 of the user interface 19 for bringing the hand 91 into a desired position with respect to the hand imaging device 1.

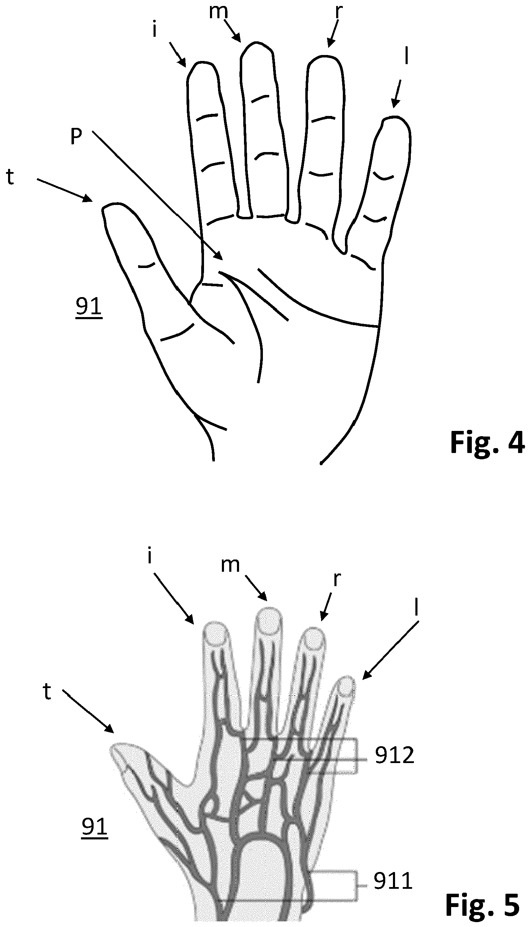

Figure 4 illustrates schematically the palm of the left hand 91 of a current person 9. The left hand 91 has a thumb t, an index finger i, a middle finger m, a ring finger r, and a little finger I. Figure 4 illustrates schematically an image of the palm of the left hand 91 of the current person 9 which was captured with a visible light sensor (e.g. 400nm to 600nm). The hand 91 has a palm print P, which in particular includes lifelines, which can be identified in visible light. Additionally or alternatively, vein patterns of the hand 91 can be determined from image data captured in near infrared light (e.g. 700nm to 900nm). Figure 4 does not illustrate vein patterns.

As is illustrated in Figure 4, the palm print P, which in particular includes lifelines, of the hand 91 includes current features, which are derived from particular lengths, positions, curvatures, textures, etc. By comparison with pre-stored features of enrolled persons, determining identification information of the current person 9 is enabled, in particular in combination with features determined from respective vein patterns. Furthermore, current features may include geometric features such as length, width of fingers or hand, 3D-geometry, etc. Furthermore, current features may include features of the back of the hand determined from image data captured in visible light, in near infrared light, or a combination thereof.

Figure 5 illustrates schematically the venous network of the back of the right hand 91 of the current person 9. The right hand 91 has a thumb t, an index finger i, a middle finger m, a ring finger r, and a little finger I. As illustrated in Figure 5, the back of the hand 91 includes veins, which include the dorsal venous network 911 (rete venosum dorsale manus) and the dorsal metacarpal veins 912 (Vv. metacarpals dorsales). Vein patterns can be determined from image data captured with a near infrared light sensor, and individual biometric features can be determined form the image data captured in near infrared light. Respective vein patterns can be determined on the palm side of a hand.

### Reference Signs

- 1,1',...: hand imaging devices
- 2, 2', ...: supervisor device
- 3, 3', ...: cash desks
- 4: banking gateway
- 5, 5', ...: banks
- 7: supervisor
- 8: store clerk
- 9: current person
- 91: hand of current person
- P: palm print of hand
- 911, 912: dorsal venous network, dorsal metacarpal veins of hand
- 11: federation server
- 12: database of federation server
- 21: payment service server
- 22: database of payment service server
- 31: store management server
- 32: database of store management server
- t,i,m,r,l: thumb finger, index finger, middle finger, ring finger, little finger

## Claims

1. A method comprising:
at a hand imaging device (1, 1', ...), capturing (S4) image data of a hand (91) of a current person (9),
at a federation server (11), comparing (S5) a current feature vector determined from the captured image data with pre-stored feature vectors of enrolled persons,
at a user device (92) of the current person (9), processing (S8) second factor information for enabling execution of an electronic payment.

2. The method according to claim 1, further comprising: at the hand imaging device (1, 1', ...) capturing image data of the hand which includes: a palm print of the hand, and a vein pattern of the hand, and three dimensional image data of the hand.

3. The method according to claim 1 or 2, further comprising: at the hand imaging device (1, 1', ...), capturing image data of the hand (91) without physical contact between the hand (91) and the hand imaging device (1, 1', ...).

4. The method according to one of claims 1 to 3, further comprising: at the hand imaging device (1, 1', ...) determining at least partially the current feature vector.

5. The method according to one of claims 1 to 4, wherein the current feature vector is determined by processing one or more of the following features: the texture and the course of visible lines of the hand, the texture and the pattern and course of the veins and the geometry of the hand.

6. The method according to one of claims 1 to 5, wherein one or more of the captured image data and the current feature vector is transmitted from the hand imaging device (1, 1', ...) via a first communication channel (10), and wherein the second factor information is processed at the user device (92) upon receipt of information via a second communication channel (20) which is separate from the first communication channel (10).

7. The method according to one of claims 1 to 6, further comprising:
at a payment service server (21), receiving a payment request (S2) for goods and services the current person (9) wishes to buy, and transmitting (S3) a hand verification request to the federation server (11),
at the federation server (11), determining, after comparison of the current feature vector with pre-stored feature vectors, identification information of the current person (9) and transmitting (S6) identification information to the payment service server (21),
at the payment service server (21), transmitting (S7) a payment order from the payment service server (21) to a banking gateway (4).

8. A system comprising:
a plurality of hand imaging devices (1, 1', ...) for capturing image data of a hand (91) of a current person (9),
a federation server (11) for comparing a current feature vector determined from the captured image data with pre-stored feature vectors of enrolled persons,
a user device (92) of the current person (9) for processing second factor information for enabling execution of a financial transaction.

9. The system according to claim 8, wherein the hand imaging devices (1, 1', ...) are further configured for capturing image data which includes: a palm print of the hand, and a vein pattern of the hand, and three dimensional image data of the hand.

10. The system according to claim 8 or 9, wherein the hand imaging devices (1, 1', ...) are further configured for capturing image data of the hand (91) without physical contact between the hand (91) and the hand imaging device (1, 1', ...).

11. The system according to one of claims 8 to 10, wherein the hand imaging devices (1, 1', ...) are further configured for at least partially determining the current feature vector.

12. The system according to one of claims 8 to 11, wherein one or more of the hand imaging devices (1, 1', ...) and the federation server (11) are further configured for determining the current feature vector by processing one or more of: the texture and the course of visible lines of the hand, the texture and the pattern and course of the veins and the geometry of the hand.

13. The system according to one of claims 8 to 12, wherein the hand imaging devices (1, 1', ...) are configured for transmitting one or more of the captured image data and the current feature vector via a first communication channel (10), and wherein the user device (92) is further configured for processing the second factor information upon receipt of information via a second communication channel (20) which is separate from the first communication channel (10).

14. The system according to one of claims 8 to 13, further comprising:
a payment service server (21) for receiving a payment request (S2) for goods and services the current person (9) wishes to buy, and for transmitting (S3) a hand verification request to the federation server (11), wherein:
the federation server (11) is further configured for determining, after comparison of the current feature vector with pre-stored feature vectors, identification information of the current person (9) and transmitting (S6) identification information to the payment service server (21),
the payment service server (21) is further configured for transmitting (S7) a payment order from the payment service server (21) to a banking gateway (4).
